# FASCICULE DE BREVET EUROPEEN

(11) **EP 4 416 460 B1**
(45) Date de publication et mention de la délivrance du brevet: **25.11.2026**
(21) Numéro de dépôt: 22800676.3
(22) Date de dépôt: 11.10.2022
(51) Int. Cl.: G01B 11/25, G01B 11/255, G01N 21/17, G01N 21/47, G01N 21/55

(54) **INSTRUMENT ET PROCÉDÉ DE MESURE DE COURBURE D'UNE SURFACE D'UN ÉCHANTILLON**
INSTRUMENT UND VERFAHREN ZUR MESSUNG DER KRÜMMUNG EINER OBERFLÄCHE EINER PROBE
INSTRUMENT AND METHOD FOR MEASURING THE CURVATURE OF A SURFACE OF A SAMPLE

(30) Priorité: 11.10.2021 FR 2110739
(43) Date de publication de la demande: 21.08.2024
(73) Titulaire: Riber, 95870 Bezons (FR)
(72) Inventeur: ROUSSEAU, Youri, 78600 Maisons Laffite (FR); GUYAUX, Jean-Louis, 36600 La Vernelle (FR); ARNOULT, Alexandre, 31320 Auzeville-Tolosane (FR)
(74) Mandataire: Jacobacci & Partners France
(86) Numéro de dépôt international: PCT/EP2022/078272
(87) Numéro de publication internationale: WO 2023/062020

(56) Documents cités:
- CN-U- 214 374 270
- FR-A1- 3 066 816
- US-A1- 2012 327 414

## Description

### Domaine technique

La présente invention concerne le domaine technique des instruments de mesure des propriétés optiques de surface d'un échantillon.

Plus précisément, l'invention concerne un instrument de mesure des propriétés optiques de surface d'un échantillon comprenant une source de lumière et un masque disposé entre la source de lumière et la surface de l'échantillon, la source de lumière étant apte à éclairer le masque de façon à générer par transmission à travers le masque un faisceau lumineux incident sur la surface de l'échantillon et à former un faisceau lumineux réfléchi, diffusé et/ou transmis par l'échantillon.

En particulier, l'invention trouve des applications dans le contrôle non destructif de surface d'une plaque de métal, de semiconducteur, notamment de silicium, de céramique ou d'écran plat suite à un procédé de traitement de surface de type dépôt, gravure ou traitement thermique.

### Technique antérieure

Dans le domaine ci-dessus, les substrats en plaque de verre, de métal, de céramique ou semiconducteur ont en général une épaisseur faible comprise entre 0,1 millimètre et quelques millimètres, pour une surface circulaire, carrée ou rectangulaire d'aire comprise entre 1 cm² et quelques m². Les traitements de surface sont susceptibles d'induire des contraintes mécaniques en tension ou en compression dans le substrat et amener des déformations de courbure du substrat. Une telle déformation de courbure induite dans le substrat peut être sphérique ou cylindrique. La courbure produite peut être concave ou convexe par rapport à la surface traitée. Le rayon de courbure d'une telle déformation peut être très grand et varier d'un substrat à un autre dans un même lot traité simultanément dans une même enceinte de traitement. Les traitements de surface peuvent aussi générer une augmentation de la rugosité de surface. Il est important de détecter et de quantifier ces dégradations du substrat ou de la surface de l'échantillon de façon non destructive et de préférence in situ en cours de traitement.

Il est connu de mesurer les déformations d'une image formée par réflexion sur une surface d'un échantillon. Le document FR 3066816 décrit un dispositif optique de mesure de la courbure d'une surface réfléchissante comprenant un motif géométrique d'éclairage composé de points lumineux, une caméra et un dispositif d'analyse d'image pour détecter une variation des distances entre points lumineux dans l'image détectée. Le document US 9070590 décrit un instrument adapté pour mesurer un changement de grandissement de la taille de l'image réfléchie par l'échantillon, pour en déduire une mesure du rayon de courbure de l'échantillon. Le document CN214374270 décrit un dispositif permettant de faire de la topographie hyperspectrale 4D grâce à de la lumière structurée.

D'autres instruments de mesure permettent de mesurer la rugosité de surface et/ou l'absorption d'un échantillon. Par exemple, le document US 2012/327414 décrit un dispositif permettant de mesurer la rugosité d'une surface, notamment pour contrôler la fabrication de LED. Toutefois, chaque instrument de mesure nécessite en général au moins une voie optique d'accès, par exemple un hublot, pour pouvoir être utilisé *in situ.* Il est difficile d'utiliser plusieurs de ces instruments de mesure simultanément, du fait du nombre très limité d'accès optiques disponibles sur les réacteurs industriels de dépôt, gravure ou de traitement thermique. En effet, les hublots peuvent perturber l'homogénéité spatiale du traitement. Les réacteurs industriels présentent par construction un nombre limité généralement à un, deux ou trois accès optiques.

Toutefois, il est souhaitable de mesurer simultanément et *in situ* plusieurs paramètres tels que la courbure, la rugosité et/ou l'absorption d'un échantillon.

Il est souhaitable de proposer un instrument et un procédé de mesure permettant des mesures simultanées de courbure de haute sensibilité et d'au moins une autre propriété optique de surface d'un échantillon, telle que réflexion, absorption et/ou diffusion.

### Exposé de l'invention

Afin de remédier aux inconvénients précités de l'état de la technique, la présente invention propose un instrument de mesure de courbure d'une surface d'un échantillon, l'instrument comprenant une seule source de lumière et un masque disposé entre la source de lumière et la surface de l'échantillon, la source de lumière étant apte à éclairer le masque de façon à générer par transmission à travers le masque un faisceau lumineux incident sur la surface de l'échantillon et à former un faisceau lumineux réfléchi par l'échantillon.

Plus particulièrement, on propose selon l'invention un instrument de mesure de courbure d'une surface d'un échantillon, dans lequel le masque comporte un fond transparent et des motifs opaques disposés à des positions prédéterminées sur la surface du masque, les motifs opaques du masque ayant une surface totale inférieure à la surface du fond transparent, l'instrument comprenant un système d'imagerie et une caméra, le système d'imagerie et la caméra étant adaptés pour recevoir au moins une partie du faisceau lumineux réfléchi et pour former une image du masque par réflexion sur l'échantillon, un système de traitement d'image étant adapté pour traiter l'image du masque par réflexion sur la surface de l'échantillon, calculer les positions respectives des motifs dans ladite image et pour comparer les positions prédéterminées des motifs du masque avec les positions calculées des motifs dans l'image, de façon à en déduire au moins un rayon de courbure de la surface de l'échantillon.

La forte transparence du masque (au moins 50% et de préférence plus de 90%) permet d'obtenir un faisceau lumineux réfléchi de plus forte puissance lumineuse. Le même faisceau lumineux incident génère par diffusion sur l'échantillon, un faisceau de lumière diffusée ayant une puissance lumineuse apte à être détectée sans requérir une autre source de lumière ni un autre hublot d'éclairage. Enfin, pour certains échantillons semiconducteurs, le faisceau lumineux incident est partiellement transmis à travers l'échantillon puis réfléchi et de nouveau transmis à travers l'échantillon. L'analyse spectrale du faisceau lumineux après transmission dans l'échantillon peut permettre de déterminer un seuil d'absorption de l'échantillon et d'en déduire la température de l'échantillon par la technique de thermométrie de bande de fréquence (ou « band edge thermometry » en terminologie anglo-saxonne).

De façon avantageuse, les motifs opaques du masque ayant une surface totale inférieure à 15%, 10%, 5%, ou même, de préférence, à 1%, de la surface du masque.

D'autres caractéristiques non limitatives et avantageuses de l'instrument de mesure de courbure et de réflectivité d'une surface d'un échantillon conforme à l'invention, prises individuellement ou selon toutes les combinaisons techniquement possibles, sont les suivantes :
les motifs opaques du masque ont une surface relative inférieure à 1% de la surface du masque ;
les motifs du masque sont disposés en matrice périodique à deux dimensions ;
les motifs ont une forme de grille, de cercles, de disques, d'ellipses concentriques (disques de Placido), de polygone simplement connexe ou de domaine fermé simplement connexe ;
l'instrument comprend en outre un séparateur optique de faisceau et un spectromètre, le séparateur optique de faisceau étant disposé pour recevoir le faisceau lumineux réfléchi et transmettre une partie du faisceau réfléchi en direction du système d'imagerie et une autre partie du faisceau lumineux réfléchi en direction du spectromètre, le spectromètre étant apte à mesurer une puissance de l'autre partie du faisceau lumineux réfléchi ;
le séparateur optique de faisceau comprend une lame séparatrice ayant une répartition de puissance optique 50-50, 40-60, 30-70, 10-90 ou 20-80 ;
l'instrument comporte un autre détecteur disposé pour mesurer une puissance d'un faisceau lumineux diffusé par l'échantillon et un système de traitement du signal adapté pour extraire de la mesure de lumière diffusée une mesure de rugosité de la surface de l'échantillon ;
l'instrument comprend un système de traitement du signal adapté pour recevoir une mesure de puissance du faisceau réfléchi détecté par le spectromètre et pour en déduire une réflectivité spectrale de l'échantillon ;
la source de lumière peut être choisie parmi une lampe halogène ou une diode électroluminescente (ou LED pour « light-emitting diode » en anglais).

L'invention propose également l'utilisation d'un instrument selon l'un des modes de réalisation en combinaison avec un appareil de traitement, par exemple de dépôt, de gravure et/ou de traitement thermique, pour des mesures in situ.

L'invention propose également un procédé de mesure de courbure d'une surface d'un échantillon, le procédé comprenant les étapes suivantes : utiliser une seule source de lumière pour éclairer un masque disposé entre la source de lumière et la surface de l'échantillon, de façon à générer par transmission à travers le masque un faisceau lumineux incident sur la surface de l'échantillon et à former un faisceau lumineux réfléchi par l'échantillon, le masque comportant un fond transparent et des motifs opaques disposés à des positions prédéterminées sur la surface du masque, les motifs opaques du masque ayant une surface totale inférieure à la surface du fond transparent; recevoir au moins une partie du faisceau lumineux réfléchi, disposer un système d'imagerie et une caméra pour recevoir la partie du faisceau réfléchi et pour former une image du masque par réflexion sur la surface de l'échantillon, traiter l'image du masque par réflexion sur la surface de l'échantillon pour calculer les positions respectives des motifs dans ladite image, comparer les positions prédéterminées des motifs du masque avec les positions calculées des motifs dans l'image, de façon à en déduire au moins un rayon de courbure de la surface de l'échantillon.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres et que le résultat desdites combinaisons reste dans le cadre de l'invention défini par les revendications annexées.

### Brève description des dessins

De plus, diverses autres caractéristiques de l'invention ressortent de la description annexée effectuée en référence aux dessins qui illustrent des formes, non limitatives, de réalisation de l'invention et où :
La figure 1 est une vue d'un instrument de mesure de courbure et de réflectivité de surface d'un échantillon selon l'invention,
La figure 2 est une vue d'une image du masque comportant des motifs opaques selon un exemple de réalisation.

Il est à noter que sur ces figures les éléments structurels et/ou fonctionnels communs aux différentes variantes peuvent présenter les mêmes références.

### Description détaillée

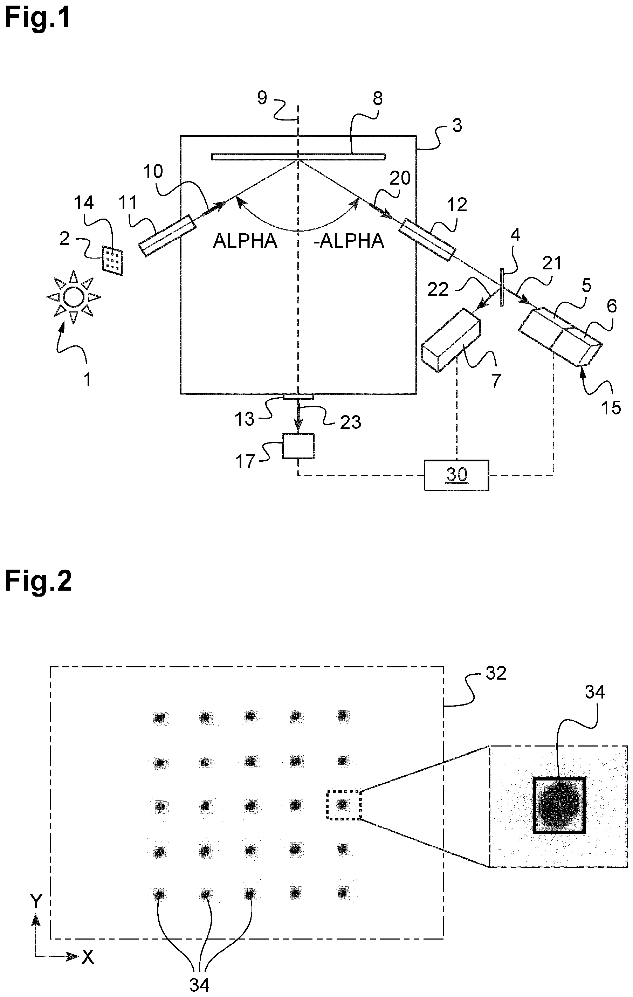

La Figure 1 représente un instrument de mesure de courbure et de réflectivité d'une surface d'un échantillon 8. L'échantillon 8 est ici par exemple une plaque de verre ou une plaque de semiconducteur, par exemple de silicium. On considère plus particulièrement un échantillon supposé être plat. L'échantillon 8 a une épaisseur comprise en général entre 0,1 millimètre et quelques millimètres. L'échantillon 8 présente en général une surface circulaire, carrée ou rectangulaire, ayant une aire comprise entre 1 cm² et quelques m².

Dans l'exemple illustré sur la figure 1, l'échantillon 8 est placé dans l'enceinte 3 d'un appareil de traitement. L'enceinte 3 comporte ici un port optique d'entrée 11 et un port optique de sortie 12. De façon optionnelle, l'enceinte 3 comporte un autre port optique 13.

L'appareil de traitement est par exemple adapté pour le dépôt de couches minces sur la surface de l'échantillon ou pour la gravure de la surface de l'échantillon, comme les appareils utilisés en microlithographie. L'enceinte 3 est par exemple une enceinte de dépôt sous vide. Dans un autre exemple d'utilisation, l'appareil de traitement est adapté pour traiter thermiquement l'échantillon, par exemple pour effectuer un recuit thermique.

En variante, l'instrument peut être utilisé ex situ. Dans ce cas, il n'y a pas de port d'entrée-sortie sur le trajet optique du faisceaux lumineux incident ou réfléchi. L'instrument de la présente divulgation peut aussi être utilisé pour la mesure de rayon de courbure de surface de composants optiques comme de lentilles ou miroirs et pour la mesure simultanée de rugosité de surface.

L'instrument de mesure comprend une source de lumière 1, un masque 2, un séparateur optique de faisceau 4, un spectromètre 7, un système d'imagerie 5 et une caméra 6, et un processeur 30 comprenant un système de traitement du signal.

La source de lumière 1 est apte à émettre un faisceau lumineux source. De façon avantageuse, la source de lumière 1 est une source de lumière blanche. Dans le présent document, on entend par source de lumière blanche, une source émettant un faisceau lumineux à une pluralité de longueurs d'onde, entre 300 et 2000 nm. Par exemple, la source comprend une ampoule halogène, un réflecteur et un système optique. En variante, la source comprend une diode électroluminescente (LED). Le faisceau lumineux source éclaire le masque 2.

Bien que la même source de lumière soit utilisée pour au moins deux mesures simultanées, de rayon de courbure et de réflectivité, la source de lumière 1 a une puissance limitée, par exemple de 1 W pour une LED ou d'au moins 30 W pour une lampe halogène.

Le masque 2 est disposé entre la source de lumière 1 et la surface de l'échantillon à analyser. Dans l'exemple illustré sur la figure 1, la source de lumière 1 et le masque 2 sont disposés à l'extérieur de l'enceinte 3, le masque 2 étant placé entre la source de lumière 1 et le port optique d'entrée 11 de l'enceinte 3. Plus particulièrement, le masque 2 comprend un fond transparent et une pluralité de motifs opaques 14 disposés à des positions prédéterminées sur la surface du masque 2. Le masque est par exemple fabriqué sur un support de verre, polycarbonate ou plexiglas, avec une épaisseur comprise entre 0,5 et quelques millimètres. Les motifs opaques 14 du masque ont une surface totale inférieure à 10% de la surface éclairée du masque 2. Les motifs opaques 14 sont avantageusement distribués spatialement suivant une matrice périodique à deux dimensions. La forme du motif opaque est par exemple une croix, un disque, un carré ou toute forme prédéterminée, géométrique ou non. A titre d'exemple non limitatif, le masque 2 comporte N=9 motifs opaques répartis suivant une grille carrée, de maille égale à 5 mm, chaque motif étant un disque noir de diamètre égal à 0,5 mm. Dans cet exemple, la surface totale des motifs opaques est de 0,35% de la surface du masque 2. Le masque 2 a par exemple une surface de 25,4 mm de diamètre.

Le faisceau lumineux qui éclaire le masque 2 forme, par transmission à travers le masque 2, un faisceau lumineux incident 10 sur la surface de l'échantillon 8. Dans l'exemple de la figure 1, le faisceau lumineux incident 10 est transmis dans l'enceinte à travers le port optique d'entrée 11. La faible surface relative des motifs opaques permet d'obtenir un faisceau lumineux incident 11 intense sur l'échantillon, sans augmenter la puissance de la source de lumière 1. Le faisceau lumineux incident 10 est avantageusement collimaté sur la surface de l'échantillon pour permettre de recevoir le maximum de lumière sur l'ensemble récepteur. En variante, le faisceau lumineux incident 10 est focalisé sur la surface de l'échantillon.

On note ALPHA l'angle d'incidence du faisceau lumineux incident 10 par rapport à la normale 9 à la surface de l'échantillon 8. De façon avantageuse, le faisceau lumineux incident 10 est collimaté. Par réflexion sur la surface de l'échantillon 8, on obtient un faisceau lumineux réfléchi 20. Le faisceau lumineux réfléchi 20 forme un angle symétrique -ALPHA avec la normale 9 à la surface de l'échantillon 8 au point d'incidence. Le faisceau lumineux réfléchi 20 est transmis via le port optique de sortie 12 à l'extérieur de l'enceinte 3.

Le séparateur optique de faisceau 4 est disposé à l'extérieur de l'enceinte 3 sur le trajet du faisceau lumineux réfléchi 20. Le séparateur optique de faisceau 4 sépare spatialement le faisceau lumineux réfléchi 20 en deux parties : une partie 21 du faisceau réfléchi est dirigée vers le système d'imagerie 5 et la caméra, tandis qu'une autre partie 22 du faisceau lumineux réfléchi est dirigée vers le spectromètre 7. De façon avantageuse, le séparateur optique de faisceau 4 est un séparateur 50-50, de façon à ce que les deux parties du faisceau réfléchi aient la même puissance. De façon alternative, le séparateur optique de faisceau 4 est un séparateur 40-60 ou 20-80 qui transmet 20% de la puissance lumineuse en direction de la caméra et 80% de la puissance lumineuse en direction du spectromètre 7. Par exemple, le séparateur optique de faisceau 4 est un séparateur à lame mince, ou de type séparateur cube ou encore séparateur de polarisation.

Le système d'imagerie 5 comprend par exemple l'objectif de la caméra 6. Le système d'imagerie 5 et la caméra 6 sont disposés pour recevoir la partie 21 du faisceau réfléchi. Plus précisément, la mise au point de la caméra 6 est effectuée sur les motifs opaques 14 du masque 2 et non pas sur la surface de l'échantillon 8. De cette manière, le système d'imagerie 5 et la caméra 6 sont ajustés pour former une image 32 nette du masque 2 par réflexion sur l'échantillon 8.

La caméra 6 enregistre l'image 32 du masque 2 par réflexion sur l'échantillon 8. Lorsque l'échantillon est plat, autrement dit présente un rayon de courbure infini, la position des motifs 34 dans l'image 32 correspond à une transformation linéaire des positions des motifs du masque 2. Toutefois, lorsque l'échantillon 8 présente une courbure, la position des motifs dans l'image est modifiée en fonction du rayon de courbure de l'échantillon. Dans le cas d'une courbure cylindrique, si la matrice de motif est alignée avec l'axe de la déformation cylindrique, les positions des motifs 34 dans l'image 32 sont modifiées suivant une seule direction de l'espace. Dans le cas d'une courbure sphérique, les positions des motifs 34 dans l'image 32 sont modifiées suivant deux directions transverses.

L'image 32 est transmise au processeur 30 qui comprend un système de traitement d'image spécialement adapté. Le système de traitement d'image est adapté pour déterminer la position de chaque motif 34 dans l'image 32. Par exemple, le système de traitement calcule les variations de distance entre motifs adjacents de manière analogue au système de traitement décrit dans le brevet FR 3066816 pour calculer une variation de distance entre images de points lumineux.

Dans l'exemple illustré sur la figure 2, la forme des motifs 34 dans l'image est elliptique. Les motifs du masque utilisé ont ici une forme de disque, tous les motifs ayant un même diamètre, et les motifs étant disposés suivant une grille carrée. Comme l'image 32 a un fond transparent, les motifs sont contrastés, ce qui permet de déterminer avec une grande précision la position et/ou la forme des motifs 34. Cela permet de détecter une déformation par courbure de l'échantillon, même si cette courbure présente un très grand rayon de courbure, par exemple supérieur ou égal à 100 km.

Le spectromètre 7 reçoit l'autre partie 22 du faisceau lumineux réfléchi. Le spectromètre 7 est configuré pour mesurer une puissance de l'autre partie 22 du faisceau lumineux réfléchi spéculairement en fonction de la longueur d'onde. Par exemple, le spectromètre fonctionne dans la gamme de longueur d'onde comprise entre 300nm et 2000 nm. On déduit de cette mesure la réflectivité de l'échantillon, qui est égale au ratio entre la puissance lumineuse réfléchie et la puissance lumineuse incidente. Comme la transmission du masque est supérieure à 90% et que le séparateur optique de faisceau transmet lui aussi une proportion importante du faisceau lumineux réfléchi, la puissance du faisceau lumineux réfléchi détecté par le spectromètre présente un niveau assez élevé pour permettre des mesures précises de réflectivité spectrale. On mesure la puissance du faisceau réfléchi en fonction de la longueur d'onde sur toute une gamme spectrale en utilisant un seul spectromètre 7.

Ainsi, l'instrument permet la mesure simultanée du rayon de courbure de l'échantillon avec une très haute sensibilité, pour de grands rayons de courbure, et de réflectivité spectrale de surface de l'échantillon, avec une grande précision. L'instrument ne nécessite que peu de ports d'entrée-sortie. Lorsque l'angle d'incidence est non nul, il suffit de deux ports d'entrée-sortie 11, 13 disposés symétriquement par rapport à la normale 9 à la surface de l'échantillon 8. De façon particulièrement avantageuse, la mesure de courbure et la mesure de réflexion sont effectuées en utilisant une seule et même source 1. Cette configuration permet d'obtenir un instrument très compact, au plus près de l'enceinte de traitement, et à moindre coût de fabrication comparé à deux instruments distincts.

En option, un autre détecteur 17 est disposé face à un autre port optique 13 de l'enceinte. Cet autre port optique 13 permet de recevoir de la lumière diffusée par la surface de l'échantillon 8. Dans l'exemple illustré en figure 1, l'autre port optique 13 est placé face à l'échantillon sur la normale 9 à la surface de l'échantillon 8. L'autre détecteur 17 reçoit un faisceau de lumière diffusée sous un angle solide déterminé, en dehors de la réflexion spéculaire. De cette manière, toujours avec une seule source 1 de lumière, on obtient trois mesures simultanées : mesure de rayon de courbure, de réflectivité spectrale et de diffusivité d'une même zone éclairée de la surface d'un échantillon. Les mesures peuvent être effectuées en temps réel, à une fréquence importante (jusqu'à 100 Hz).

La mesure de l'intensité de la lumière diffusée est transmise au processeur 30. Un système de traitement du signal permet de mesurer des variations relatives de rugosité de surface. On obtient ainsi une mesure des variations relatives de rugosité de surface de l'échantillon ayant une sensibilité et/ou précision de l'ordre du nanomètre.

Selon une variante, la mesure de courbure par réflectivité est montée en incidence normale. Dans ce cas, la source et la partie réceptrice (caméra et spectromètre) sont montés sur le port 13 avec une autre lame séparatrice. La mesure de rugosité est alors montée sur un autre port optique 11 ou 12, par exemple.

Bien entendu, diverses autres modifications peuvent être apportées à l'invention dans le cadre des revendications annexées.

## Revendications

1. Instrument de mesure de courbure d'une surface d'un échantillon (8), l'instrument comprenant une source de lumière (1) et un masque (2) disposé entre la source de lumière (1) et la surface de l'échantillon (8), la source de lumière (1) étant apte à éclairer le masque (2) de façon à générer par transmission à travers le masque un faisceau lumineux incident (10) sur la surface de l'échantillon (8) et à former un faisceau lumineux réfléchi (20) par l'échantillon, **caractérisé en ce que** la source de lumière (1) comprend une seule source de lumière, le masque (2) comporte un fond transparent et des motifs opaques (14) disposés à des positions prédéterminées sur la surface du masque, les motifs opaques (14) du masque ayant une surface totale inférieure à la surface du fond transparent, l'instrument comprenant un système d'imagerie (5) et une caméra (6), le système d'imagerie (5) et la caméra (6) étant adaptés pour recevoir au moins une partie (21) du faisceau lumineux réfléchi et pour former une image (32) du masque par réflexion sur l'échantillon (8), un système de traitement d'image étant adapté pour traiter l'image (32) du masque par réflexion sur la surface de l'échantillon, calculer les positions respectives des motifs dans ladite image (32) et pour comparer les positions prédéterminées des motifs (14) du masque avec les positions calculées des motifs (34) dans l'image (32), de façon à en déduire au moins un rayon de courbure de la surface de l'échantillon (8).

2. Instrument selon la revendication 1 dans lequel les motifs opaques (14) du masque (2) ont une surface relative inférieure à 15%, 10%, 5% ou 1% de la surface du masque.

3. Instrument selon l'une des revendications 1 à 2 dans lequel les motifs du masque (14) sont disposés en matrice périodique à deux dimensions.

4. Instrument selon l'une des revendications 1 à 3 comprenant en outre un séparateur optique de faisceau (4) et un spectromètre (7), le séparateur optique de faisceau (4) étant disposé pour recevoir le faisceau lumineux réfléchi (20) et transmettre une partie (21) du faisceau réfléchi en direction du système d'imagerie (5) et une autre partie (22) du faisceau lumineux réfléchi en direction du spectromètre (7), le spectromètre (7) étant apte à mesurer une puissance de l'autre partie (22) du faisceau lumineux réfléchi.

5. Instrument selon la revendication 4 dans lequel le séparateur optique de faisceau (4) comprend une lame séparatrice ayant une répartition de puissance optique 50-50, 40-60, 30-70, 10-90 ou 20-80.

6. Instrument selon l'une des revendications 1 à 5 dans lequel l'instrument comporte un autre détecteur (17) disposé pour mesurer une puissance d'un faisceau lumineux diffusé (23) par l'échantillon et un système de traitement du signal adapté pour extraire de la mesure de lumière diffusée une mesure de rugosité de la surface de l'échantillon (8).

7. Instrument selon l'une des revendications 4 ou 5 dans lequel l'instrument comprend un système de traitement du signal adapté pour recevoir une mesure de puissance du faisceau réfléchi détecté par le spectromètre et pour en déduire une réflectivité spectrale de l'échantillon.

8. Instrument selon l'une des revendications 1 à 7 dans lequel la source de lumière (1)est choisie parmi une lampe halogène et une diode électroluminescente.

9. Utilisation d'un instrument selon l'une des revendications 1 à 8 en combinaison avec un appareil (3) de traitement pour des mesures in situ.

10. Procédé de mesure de courbure d'une surface d'un échantillon (8), le procédé comprenant les étapes suivantes : utiliser une seule source de lumière (1) pour éclairer un masque (2) disposé entre la source de lumière et la surface de l'échantillon (8), de façon à générer par transmission à travers le masque un faisceau lumineux incident (10) sur la surface de l'échantillon (8) et à former un faisceau lumineux réfléchi (20) par l'échantillon, le masque (2) comportant un fond transparent et des motifs opaques (14) disposés à des positions prédéterminées sur la surface du masque, les motifs opaques (14) du masque ayant une surface totale inférieure à la surface du fond transparent ; recevoir au moins une partie (21) du faisceau lumineux réfléchi (20), disposer un système d'imagerie (5) et une caméra (6) pour recevoir la partie (21) du faisceau réfléchi et pour former une image (32) du masque par réflexion sur la surface de l'échantillon (8), traiter l'image (32) du masque par réflexion sur la surface de l'échantillon pour calculer les positions respectives des motifs dans ladite image, comparer les positions prédéterminées des motifs (14) du masque avec les positions calculées des motifs (34) dans l'image (32), de façon à en déduire au moins un rayon de courbure de la surface de l'échantillon (8).

## Patentansprüche

1. Instrument zur Messung der Krümmung der Oberfläche einer Probe (8), wobei das Instrument eine Lichtquelle (1) und eine zwischen der Lichtquelle (1) und der Oberfläche der Probe (8) angeordnete Maske (2) aufweist, wobei die Lichtquelle (1) dazu ausgelegt ist, die Maske (2) so zu beleuchten, daß durch Übertragung durch die Maske hindurch ein auf die Oberfläche der Probe (8) einfallender Lichtstrahl (10) erzeugt wird und daß ein von der Probe reflektierter Lichtstrahl (20) gebildet wird, **dadurch gekennzeichnet, daß** die Lichtquelle (1) eine einzige Lichtquelle aufweist, die Maske (2) einen durchsichtigen Untergrund und an vorbestimmten Positionen auf der Oberfläche der Maske angeordnete undurchsichtige Motive (14) aufweist, wobei die undurchsichtigen Motive (14) eine insgesamt kleinere Oberfläche als die Oberfläche des durchsichtigen Untergrunds haben, wobei das Instrument ein Bildgebungssystem (5) und eine Kamera (6) aufweist, wobei das Bildgebungssystem (5) und die Kamera (6) dazu ausgelegt sind, mindestens einen Teil (21) des reflektierten Lichtstrahls zu empfangen und ein Bild (32) der Maske durch Reflexion auf der Probe (8) zu bilden, wobei ein Bildverarbeitungssystem dazu ausgelegt ist, das Bild (32) der Maske durch Reflexion auf der Probe zu verarbeiten, die jeweiligen Positionen der Motive im besagten Bild (32) zu berechnen und die vorbestimmten Positionen der Motive (14) der Maske mit den berechneten Positionen der Motive (34) im Bild (32) zu vergleichen, um daraus mindestens einen Krümmungsradius der Oberfläche der Probe (8) abzuleiten.

2. Instrument gemäß Anspruch 1, bei dem die undurchsichtigen Motive (14) der Maske (2) eine relative Oberfläche von kleiner als 15 %, 10 %, 5 % oder 1 % der Oberfläche der Maske haben.

3. Instrument gemäß einem der Ansprüche 1 bis 2, bei dem die Motive (14) der Maske in einer periodischen zweidimensionalen Matrix angeordnet sind.

4. Instrument gemäß einem der Ansprüche 1 bis 3, das außerdem einen optischen Strahlteiler (4) und ein Spektrometer (7) aufweist, wobei der optische Strahlteiler (4) so angeordnet ist, daß er den reflektierten Lichtstrahl (20) empfängt und einen Teil (21) des reflektierten Lichtstrahls in Richtung des Bildverarbeitungssystems (5) und einen anderen Teil (22) des reflektierten Lichtstrahls in Richtung des Spektrometers (7) überträgt, wobei das Spektrometer (7) geeignet ist, eine Leistung des anderen Teils (22) des reflektierten Lichtstrahls zu messen.

5. Instrument gemäß Anspruch 4, bei dem der optische Strahlteiler (4) eine Trennlamelle mit einer Verteilung 50-50, 40-60, 30-70, 10-90 oder 20-80 der optischen Leistung aufweist.

6. Instrument gemäß einem der Ansprüche 1 bis 5, bei dem das Instrument einen weiteren Sensor (17), der dazu ausgelegt ist, eine Leistung eines von der Probe ausgesandten Lichtstrahls zu messen, und ein Signalverarbeitungssystem, das dazu ausgelegt ist, aus der Messung des ausgesandten Lichts eine Messung der Rauigkeit der Oberfläche der Probe (8) abzuleiten, aufweist.

7. Instrument gemäß einem der Ansprüche 4 oder 5, bei dem das Instrument ein Signalverarbeitungssystem aufweist, das dazu ausgelegt ist, eine Messung der Leistung des vom Spektrometer erfaßten reflektierten Lichtstrahls zu empfangen und daraus ein spektrales Reflexionsvermögen der Probe abzuleiten.

8. Instrument gemäß einem der Ansprüche 1 bis 7, bei dem die Lichtquelle (1) aus einer Halogenlampe und einer Leuchtdiode ausgewählt ist.

9. Verwenden eines Instruments gemäß einem der Ansprüche 1 bis 8 in Verbindung mit einem Verarbeitungsgerät (3) für In-situ-Messungen.

10. Verfahren zur Messung der Krümmung der Oberfläche einer Probe (8), wobei das Verfahren die folgenden Schritte aufweist: Verwenden einer einzigen Lichtquelle (1) um eine zwischen der Lichtquelle und der Oberfläche der Probe (8) angeordnete Maske (2) so zu beleuchten, daß durch Übertragung durch die Maske hindurch ein auf die Oberfläche der Probe (8) einfallender Lichtstrahl (10) erzeugt wird und daß ein von der Probe reflektierter Lichtstrahl (20) gebildet wird, wobei die Maske (2) einen durchsichtigen Untergrund und an vorbestimmten Positionen auf der Oberfläche der Maske angeordnete undurchsichtige Motive (14) aufweist, wobei die undurchsichtigen Motive (14) eine insgesamt kleinere Oberfläche als die Oberfläche des durchsichtigen Untergrunds haben; Empfangen mindestens eines Teils (21) des reflektierten Lichtstrahls (20), Anordnen eines Bildgebungssystems (5) und einer Kamera (6), um den Teil (21) des reflektierten Lichtstrahls zu empfangen und ein Bild (32) der Maske durch Reflexion auf der Probe (8) zu bilden, Verarbeiten des Bilds (32) der Maske durch Reflexion auf der Probe, um die jeweiligen Positionen der Motive im besagten Bild zu berechnen, Vergleichen der vorbestimmten Positionen der Motive (14) der Maske mit den berechneten Positionen der Motive (34) im Bild (32), um daraus mindestens einen Krümmungsradius der Oberfläche der Probe (8) abzuleiten.

## Claims

1. An instrument for measuring the surface curvature of a sample (8), the instrument comprising a light source (1) and a mask (2) arranged between the light source (1) and the surface of the sample (8), the light source (1) being suitable to illuminate the mask (2) so as to generate by transmission through the mask a light beam (10) incident on the surface of the sample (8) and to form a light beam (20) reflected by the sample, **characterized in that** the light source (1) comprises a single light source, the mask (2) has a transparent background and opaque patterns (14) arranged at predetermined position on the mask surface, the opaque patterns (14) of the mask having a total surface area smaller than the surface area of the transparent background, the instrument comprising an imaging system (5) and a camera (6), the imaging system (5) and the camera (6) being suitable to receive at least one part (21) of the reflected light beam and to form an image (32) of the mask by reflection on the sample (8), an image processing system being suitable to process the image (32) of the mask by reflection on the sample surface, calculate the respective positions of the patterns in said image (32) and to compare the predetermined positions of the patterns (14) of the mask with the calculated positions of the patterns (34) in the image (32), in order to deduce therefrom at least one radius of surface curvature of the sample (8).

2. The instrument according to claim 1, wherein the opaque patterns (14) of the mask (2) have a total surface area less than 15 %, 10 %, 5 %, or 1 % of the mask surface area.

3. The instrument according to one of claims 1 to 2, wherein the mask patterns (14) are arranged as a two-dimensional periodic matrix.

4. The instrument according to one of claims 1 to 3, further comprising an optical beam splitter (4) and a spectrometer (7), the optical beam splitter (4) being arranged so as to receive the reflected light beam (20) and to transmit one part (21) of the reflected beam towards the imaging system (5) and another part (22) of the reflected light beam towards the spectrometer (7), the spectrometer (7) being suitable for measuring a power of the other part (22) of the reflected light beam.

5. The instrument according to claim 4, wherein the optical beam splitter (4) comprises a plate beam splitter having an optical power distribution of 50-50, 40-60, 30-70, 10-90 or 20-80.

6. The instrument according to one of claims 1 to 5, wherein the instrument includes another sensor (17) arranged to measure a power of a light beam (23) scattered by the sample and a signal processing system suitable for extracting from the scattered light measurement a measurement of the surface roughness of the sample (8).

7. The instrument according to one of claims 4 or 5, wherein the instrument comprises a signal processing system suitable for receiving a power measurement of the reflected beam detected by the spectrometer and deducing therefrom a spectral reflectivity of the sample.

8. The instrument according to one of claims 1 to 7, wherein the light source (1) is chosen among a halogen lamp or a light-emitting diode.

9. The use of an instrument according to one of claims 1 to 8, in combination with a treatment apparatus (3) for measurements in situ.

10. A method for measuring the surface curvature of a sample (8), the method comprising the following steps: using a single light source (1) to illuminate a mask (2) located between the light source and the surface of the sample (8), in order to generate by transmission through the mask a light beam (10) incident on the surface of the sample (8) and to form a light beam (20) reflected by the sample, the mask (2) including a transparent background and opaque patterns (14) arranged at predetermined positions on the surface of the mask, the opaque patterns (14) of the mask having a total surface area smaller than the surface area of the transparent background; receiving at least one part (21) of the reflected light beam (20), placing an imaging system (5) and a camera (6) to receive the part (21) of the reflected beam and to form an image (32) of the mask by reflection on the surface of the sample (8), processing the mask image (32) by reflection on the surface of the sample to calculate the respective positions of the patterns in said image, comparing the predetermined positions of the mask patterns (14) with the calculated positions of the patterns (34) in the image (32), in order to deduce therefrom at least one radius of surface curvature of the sample (8).
